# EUROPEAN PATENT SPECIFICATION

(11) **EP 1 158 186 B1**
(45) Date of publication and mention of the grant of the patent: **16.03.2005**
(21) Application number: 00203693.7
(22) Date of filing: 24.10.2000
(51) Int. Cl.: F16B 19/10, F16B 37/06

(54) **Polygonal rivet with an internal threading**
Polygonaler Spreizniet mit einem Innengewinde
Rivet polygonale avec une filetage interne

(30) Priority: 24.05.2000 IT MI000324 U
(43) Date of publication of application: 28.11.2001
(73) Proprietor: F.lli Mauri S.r.l., 23852 Garlate (Lecco) (IT)
(72) Inventor: Mauri, Gaetano, Lecco (IT)
(74) Representative: Raimondi, Margherita

(56) References cited:
- EP-A- 0 674 109
- DE-A- 19 902 461
- US-A- 3 304 830
- US-A- 3 797 358

## Description

The present invention relates to a rivet for joining with screws and the like, comprising a body internally provided with a female thread and an abutment head, said body having a polygonal external cross-section.

In the art, problems arising from the need to join flat wooden elements to associated supports or the like are known; more particularly it is known that there are problems associated with the insertion, in the flat element made of wood or other material, of metal elements such as rivets and the like which are designed to be joined with corresponding screws, tightening of which produces relative fastening between the said wooden element and its support.

It is also known from IT-222,656 in the name of the same present Applicants that said rivets are provided with elements projecting in the axial direction from the bottom surface of the head so as to prevent the rotation of the rivet during tightening of the screw, which rotation would prevent the latter from being fully tightened.

Further example of prior art are disclosed into EP - 0 674 109, US-3,304,830 and US - 3,797,358 that disclose deformable nuts and/or rivets according to the preamble of the claim 1.

Although performing their function, these known rivets work properly, however, only in the case of low tightening forces, tending instead to rotate when certain values of said forces are exceeded.

The technical problem which is posed, therefore, is that of providing a rivet which is able to be inserted in elements made of wood, plastic or similar material and joined with a tightening screw, having improved characteristics in terms of preventing rotation of said screw.

Within the context of this problem a further requirement is that the rivet should have a high degree of reliability and allow numerous screw tightening and untightening operations as well as low-cost production using automatic machines.

These technical problems are solved according to the present invention by a rivet according to the characteristics of claim 1.

Further details may be obtained from the following description of a non-limiting example of embodiment of the invention, provided with reference to the accompanying plates of drawings in which:

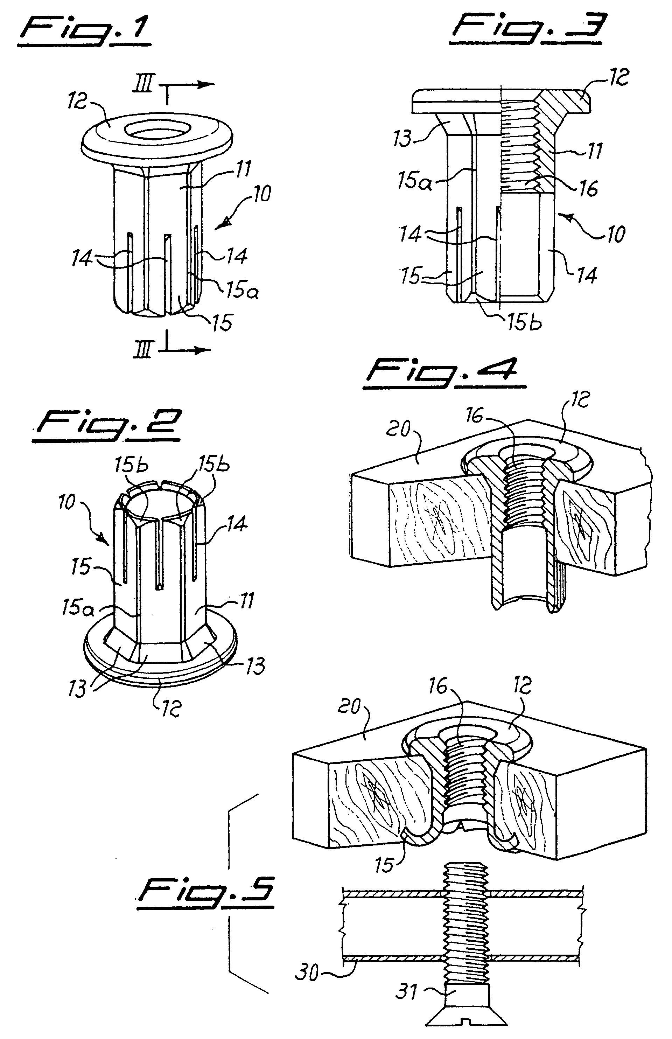

- Figure 1:: shows a perspective view of a rivet according to the present invention;
- Figure 2:: shows a perspective view of an overturned rivet according to the present invention;
- Figure 3:: shows a semi-sectional half view of the rivet according to Fig. 1;
- Figure 4:: shows a schematic cross-sectional view of the rivet inserted in a wooden element; and
- Figure 5:: shows a schematic view of the rivet inserted
in a wooden element, after upsetting and ready for joining with a corresponding screw.

As illustrated, the rivet 10 according to the invention has a body 11 formed as one piece with a head 12. The body 11 has a substantially hexagonal shape extending in the axial direction over a suitable length depending on the thickness of the surface 20 into which it must be inserted.

The body 11 is connected to the head 12 via chamfers 13 which follow the hexagonal perimeter of the body 11 itself.

The body 11 also has incisions 14 extending in the axial direction over a suitable length from the end of the body opposite to that of the head; said incisions therefore separate tongues having a cross-section substantially in the form of an isosceles triangle with the edge of its vertex 15a formed by the side of the hexagon.

The free end of each tongue also has a chamfer 15b designed to facilitate penetration into the material of the surface 20.

Internally the body 11 has a circular cross-section with an axial portion provided with a female thread 16 suitable for joining with a corresponding tightening screw 31 which passes through the support, surface or the like 30 to be fastened to the surface 20.

The operating principle of the rivet is as follows:
- the rivet is inserted into the surface 20 made of wood or the like to be fastened (Fig. 4);
- the tongues 15 are upset so that, being folded back, they penetrate with their free ends into the said surface (Fig. 5);
- in this way the rivet is prepared for joining with the corresponding screw 31 which, being screwed into the female thread 16, causes the two elements 20 and 30 to be fastened together.

Owing to the hexagonal cross-section of its body, the rivet is able to withstand rotation due to forces much higher than those possible with rivets according to the known art, making the rivet suitable for applications which involve high tightening forces, without having to increase the dimensions of the rivet and consequently reducing also the corresponding warehouse stocks.

Although a hexagonal form of the body 11 is illustrated and described, said body may, more generally, have a polygonal shape.

## Claims

1. Rivet for joining with screws (31) and the like, comprising a body (11) internally provided with a female thread (16) and a head (12), said body (11) having a polygonal external cross-section
**characterized in that** said body (11) has longitudinal incisions (14) realized on each surface of the polygon and starting from the free edge of the body itself to separate longitudinal tongues (15) and
**in that** said tongues (15) have a cross-section substantially in the form of a triangle.

2. Rivet according to Claim 1, **characterized in that** said polygonal cross-section of the body (11) is hexagonal.

3. Rivet according to Claim 1, **characterized in that** said tongues (15) have a free edge provided with an end chamfer (15b).

4. Rivet according to Claim 1, **characterized in that** said triangle is an isosceles triangle.

5. Rivet according to Claim 4, **characterized in that** the vertex (15a) of said triangle coincides with the edge of the side of the polygon forming the rivet body.

6. Rivet according to Claim 1, **characterized in that** said body (11) is connected to the head via chamfers parallel with the perimetral sides of the polygon.

## Patentansprüche

1. Niete zur Verbindung mit Schrauben (31) und dergleichen, umfassend einen Körper (11), der innen mit einem Innengewinde (16) versehen ist, und einen Kopf (12), wobei der Körper (11) einen polygonalen Außenquerschnitt hat,
**dadurch gekennzeichnet, dass** der Körper (11) Längseinschnitte (14) aufweist, die an jeder Fläche des Polygons ausgeführt sind und vom freien Rand des Körpers selbst ausgehen, um Längszungen (15) zu trennen, und dass die Zungen (15) einen Querschnitt haben, der im Wesentlichen die Form eines Dreiecks aufweist.

2. Niete gemäß Anspruch 1, **dadurch gekennzeichnet, dass** der polygonale Querschnitt des Körpers (11) sechseckig ist.

3. Niete gemäß Anspruch 1, **dadurch gekennzeichnet, dass** die Zungen (15) einen mit einer Endabschrägung (15b) versehenen freien Rand aufweisen.

4. Niete gemäß Anspruch 1, **dadurch gekennzeichnet, dass** das Dreieck ein gleichschenkliges Dreieck ist.

5. Niete gemäß Anspruch 4, **dadurch gekennzeichnet, dass** die Spitze (15a) des Dreiecks mit der Kante der Seite des den Nietenkörper bildenden Polygons zusammenfällt.

6. Niete gemäß Anspruch 1, **dadurch gekennzeichnet, dass** der Körper (11) über Abschrägungen, die zu den Umfangsseiten des Polygons parallel sind, mit dem Kopf verbunden ist.

## Revendications

1. Rivet destiné à être associé à des vis (31) et éléments similaires, comprenant un corps (11) muni intérieurement d'un filetage femelle (16) et une tête (12), ledit corps (11) ayant une section transversale extérieure polygonale, ***caractérisé en ce que*** ledit corps (11) présente des incisions longitudinales (14) réalisées sur chaque surface du polygone et partant du bord libre du corps proprement dit pour séparer des languettes longitudinales (15) et ***en ce que*** lesdites languettes (15) ont une section transversale essentiellement en forme de triangle.

2. Rivet selon la Revendication 1, ***caractérisé en ce que*** ladite section transversale polygonale du corps (11) est hexagonale.

3. Rivet selon la Revendication 1, ***caractérisé en ce que*** lesdites languettes (15) ont un bord libre muni d'un chanfrein terminal (15b).

4. Rivet selon la Revendication 1, ***caractérisé en ce que*** ledit triangle est un triangle isocèle.

5. Rivet selon la Revendication 4, ***caractérisé en ce que*** ledit sommet (15a) dudit triangle coïncide avec le bord du côté du polygone formant le corps du rivet.

6. Rivet selon la Revendication 1, ***caractérisé en ce que*** ledit corps (11) est réuni à la tête par l'intermédiaire de chanfreins parallèles aux faces périmétriques du polygone.
